# EUROPÄISCHE PATENTSCHRIFT

(11) **EP 2 122 525 B1**
(45) Veröffentlichungstag und Bekanntmachung des Hinweises auf die Patenterteilung: **27.03.2019**
(21) Anmeldenummer: 08708004.0
(22) Anmeldetag: 21.01.2008
(51) Int. Cl.: G06F 21/00

(54) **VERFAHREN UND VORRICHTUNG ZUM GESICHERTEN SPEICHERN UND ZUM GESICHERTEN LESEN VON NUTZDATEN**
METHOD AND DEVICE FOR SECURELY STORING AND SECURELY READING USER DATA
PROCÉDÉ ET DISPOSITIF D'ENREGISTREMENT ET DE LECTURE SÉCURISÉS DE DONNÉES UTILES

(30) Priorität: 16.02.2007 DE 102007008293
(43) Veröffentlichungstag der Anmeldung: 25.11.2009
(73) Patentinhaber: Continental Automotive GmbH, 30165 Hannover (DE)
(72) Erfinder: KIMMICH, Franz, 78713 Schramberg (DE); GERBER, Rudolf, 78126 Königsfeld (DE); GÖTZ, Manfred, 37077 Göttingen (DE)
(86) Internationale Anmeldenummer: PCT/EP2008/050600
(87) Internationale Veröffentlichungsnummer: WO 2008/098817

(56) Entgegenhaltungen:
- WO-A-2006/010347
- WO-A-2006/089813
- WO-A-2006/132939
- US-A1- 2005 050 342
- GAL E ET AL: "ALGORITHMS AND DATA STRUCTURES FOR FLASH MEMORIES" ACM COMPUTING SURVEYS, ACM, NEW YORK, NY, US, US, Bd. 37, Nr. 2, 1. Juni 2005 (2005-06-01), Seiten 138-163, XP002453935 ISSN: 0360-0300
- PIERNAS J ET AL: "DUALFS: A NEW JOURNALING FILE SYSTEM WITHOUT META-DATA DUPLICATION" CONFERENCE PROCEEDINGS OF THE 2002 INTERNATIONAL CONFERENCE ON SUPERCOMPUTING. ICS'02. NEW YORK, NY, JUNE 22 - 26, 2002; [ACM INTERNATIONAL CONFERENCE ON SUPERCOMPUTING], NEW YORK, NY : ACM, US, Bd. CONF. 16, 22. Juni 2002 (2002-06-22), Seiten 137-146, XP001171510 ISBN: 978-1-58113-483-4

## Beschreibung

Die Erfindung betrifft ein Verfahren und eine Vorrichtung zum gesicherten Speichern und zum gesicherten Lesen von Nutzdaten, insbesondere in einem digitalen Tachographen.

In der WO 2005/098567 A1 ist eine Anordnung mit einem integrierten Schaltkreis offenbart. Der integrierte Schaltkreis umfasst eine Verschlüsselungseinheit als ein Funktionsmodul, mittels derer Daten oder Programmkode verschlüsselbar und entschlüsselbar sind. Ferner ist zum Schutz vor Manipulation eine Sicherheitssensorik als Funktionsmodul vorgesehen, mittels derer mindestens ein Betriebsparameter des integrierten Schaltkreises überwachbar ist. Eine Schutzschicht kann auf dem integrierten Schaltkreis ausgebildet sein und überwacht werden. Die Schutzschicht muss zerstört werden, um mechanisch auf die Struktur des integrierten Schaltkreises zugreifen zu können. Wird die Zerstörung der Schutzschicht erkannt, wird eine Löschung der zu schützenden Daten bewirkt.

Die US 2005/0050342 A1 offenbart ein Datenspeichersystem zum sicheren Speichern von Informationen. Das Datenspeichersystem schützt vor Modifizierung der Informationen, da ein kryptographischer Prüfwert, wie beispielsweise eine Prüfsumme, eine Funktion der Daten, eines kryptographischen Schlüssels und einer Adresse des Datensatzes ist. Die Informationen werden sicher gesichert, wobei ein stichprobenartiger Zugriff zur Aktualisierung der Datensätze ermöglicht wird.

Aus der WO 2006/132939 A2 ist ein nicht flüchtiges Speicherdatenadressübersetzungsschema bekannt. Das Speicherdatenadressübersetzungsschema verwendet ein hierarchisches Adressübersetzungssystem, das in dem nicht flüchtigen Speicher selbst gespeichert ist.

Die Aufgabe der Erfindung ist, ein Verfahren und eine Vorrichtung zum gesicherten Speichern und ein Verfahren und eine Vorrichtung zum gesicherten Lesen von Nutzdaten zu schaffen, die zuverlässig sind.

Die Aufgabe wird gelöst durch die Merkmale der unabhängigen Patentansprüche. Vorteilhafte Weiterbildungen der Erfindung sind in den Unteransprüchen gekennzeichnet.

Gemäß eines ersten Aspekts zeichnet sich die Erfindung aus durch ein Verfahren und eine entsprechende Vorrichtung zum gesicherten Speichern von Nutzdaten. Die Nutzdaten werden in mindestens einem Datensatz in mindestens einem vorgegebenen, logischen Datenbereich gespeichert. Dem mindestens einen Datensatz wird jeweils eine Datensatzkennung zugeordnet, die einen in dem jeweiligen vorgegebenen Datenbereich eindeutigen Eindeutigkeitsstempel, eine eindeutige Datenbereichskennung des vorgegebenen Datenbereichs, in dem der jeweilige Datensatz gespeichert ist, und eine logische Position des jeweiligen Datensatzes innerhalb des jeweiligen vorgegebenen Datenbereichs umfasst. Die Datensatzkennung wird gespeichert. Zu den Nutzdaten und der jeweils zugehörigen Datensatzkennung des jeweiligen Datensatzes wird ein Datensatzprüfwert ermittelt und gespeichert. Dem jeweiligen vorgegebenen Datenbereich wird eine Datenbereichsinformation zugeordnet, die die Datenbereichskennung des jeweiligen vorgegebenen Datenbereichs umfasst. Die Datenbereichsinformation umfasst ferner Informationen zu mindestens einem Wertebereich der Eindeutigkeitsstempel der aktuell in dem jeweiligen vorgegebenen Datenbereich gespeicherten Datensätze. Die jeweilige Datenbereichsinformation wird sicher oder gesichert gespeichert.

Sicheres Speichern bedeutet, dass die so gespeicherten Daten vor Manipulation geschützt gespeichert werden. Das sichere Speichern erfolgt bevorzugt in einem sicheren Speicher, in dem die Daten elektrisch und/oder mechanisch vor Manipulation geschützt sind. Gesichertes Speichern bedeutet, dass die so gespeicherten Daten auf Manipulationen überprüfbar sind, zum Beispiel durch Überprüfen eines kryptographisch ermittelten Prüfwerts, wie zum Beispiel des Datensatzprüfwerts, oder einer kryptographisch ermittelten digitalen Signatur. Das gesicherte Speichern hat den Vorteil, dass die so gespeicherten Daten einfach und zuverlässig auf ihre Integrität überprüfbar sind und dass die Daten ferner nicht in dem sicheren Speicher gespeichert werden müssen. Aufgrund des im Allgemeinen hohen Preises des sicheren Speichers, können so Kosten gespart werden. Das sichere beziehungsweise gesicherte Speichern umfasst insbesondere kryptographisch sicheres beziehungsweise gesichertes Speichern, das heißt insbesondere das Nutzen kryptographischer Schlüssel und/oder kryptographischer Algorithmen zur Gewährleistung der Sicherheit.

Durch Vorsehen des Datensatzprüfwerts ist eine Manipulation der Nutzdaten und/oder der zugehörigen Datensatzkennung zuverlässig erkennbar. Anhand der Datenbereichskennung ist ein Austausch eines Datensatzes zwischen unterschiedlichen vorgegebenen Datenbereichen zuverlässig erkennbar. Ferner ist anhand der logischen Position des Datensatzes innerhalb des zugehörigen, vorgegebenen Datenbereichs ein Vertauschen von Datensätzen zuverlässig erkennbar. Anhand des Eindeutigkeitsstempels und der Information zu dem mindestens einen Wertebereich der Eindeutigkeitsstempel ist eine so genannte Replay-Attacke zuverlässig erkennbar. Bei einer Replay-Attacke wird beispielsweise ein alter Datensatz, der ungültig geworden ist, der jedoch einen korrekten Datensatzprüfwert aufweist, als ein neuerer Datensatz ausgegeben.

Durch die genannten Maßnahmen sind die Nutzdaten gesichert gespeichert. Manipulationen der Nutzdaten sind einfach und zuverlässig erkennbar. Ferner ermöglicht das Vorsehen der Datensatzkennung, des Datensatzprüfwerts und der Datenbereichsinformation einen schnellen Zugriff auf die Nutzdaten und insbesondere ein schnelles, gesichertes Schreiben und ein schnelles, gesichertes Lesen und Überprüfen der Nutzdaten. Ein weiterer Vorteil ist, dass die Nutzdaten und die Datensatzkennung nicht in dem sicheren Speicher gespeichert werden müssen.

In einer vorteilhaften Ausgestaltung umfasst das gesicherte Speichern der jeweiligen Datenbereichsinformation, zu mindestens einer Datenbereichsinformation mindestens eines vorgegebenen Datenbereichs einen gemeinsamen oder jeweiligen Datenbereichsprüfwert zu ermitteln und sicher oder gesichert zu speichern. Der Vorteil ist, dass Manipulationen der mindestens einen Datenbereichsinformation zuverlässig erkennbar sind. Ferner muss die mindestens eine Datenbereichsinformation so nicht in dem sicheren Speicher gespeichert sein. Der sichere Speicher kann dadurch mit einer besonders kleinen Speicherkapazität ausgebildet und entsprechend kostengünstig sein. Ferner ist die Integrität der mindestens einen Datenbereichsinformation einfach, schnell und zuverlässig überprüfbar.

In einer weiteren vorteilhaften Ausgestaltung ist dem jeweiligen vorgegebenen Datenbereich eine Ausschlussliste ungültig gewordener Datensätze zugeordnet. Der jeweilige Datensatz, der ungültig geworden ist, wird in der Ausschlussliste registriert. Die Ausschlussliste wird sicher oder gesichert gespeichert. Dadurch kann eine Replay-Attacke mit dem ungültig gewordenen Datensatz zuverlässig verhindert werden. Ferner ist so ein Löschen eines Datensatzes möglich, wodurch dieser ungültig wird, ohne die Integrität der in dem zugehörigen, vorgegebenen Datenbereich zu gefährden.

In diesem Zusammenhang ist es vorteilhaft, wenn durch das Registrieren des jeweiligen, ungültig gewordenen Datensatzes in der Ausschlussliste der zugehörige Eindeutigkeitsstempel in die Ausschlussliste eingetragen wird oder abhängig von diesem mindestens ein Wertebereich ungültig gewordener Eindeutigkeitsstempel in die Ausschlussliste eingetragen oder in der Ausschlussliste erweitert wird. Dies hat den Vorteil, dass ein Speicherplatzbedarf für die Ausschlussliste gering ist, insbesondere bei Vorsehen des mindestens einen Wertebereichs ungültig gewordener Eindeutigkeitsstempel. Ferner kann die Ausschlussliste so besonders schnell durchsucht werden.

In einer weiteren vorteilhaften Ausgestaltung wird ein aktueller Zeitstempel ermittelt und in der jeweiligen Datensatzkennung gespeichert. Dadurch sind zeitlich zusammenhängende Datensätze sehr einfach und schnell ermittelbar, insbesondere auch in zwei oder mehr der vorgegebenen Datenbereichen.

Gemäß eines zweiten Aspekts zeichnet sich die Erfindung aus durch ein Verfahren und eine entsprechende Vorrichtung zum gesicherten Lesen von Nutzdaten. Die Nutzdaten mindestens eines Datensatzes werden gelesen, die in mindestens einem vorgegebenen, logischen Datenbereich gespeichert sind. Eine dem mindestens einen Datensatz zugeordnete Datensatzkennung wird gelesen, die einen in dem jeweiligen vorgegebenen Datenbereich eindeutigen Eindeutigkeitsstempel, eine eindeutige Datenbereichskennung des vorgegebenen Datenbereichs, in dem der jeweilige Datensatz gespeichert ist, und eine logische Position des jeweiligen Datensatzes innerhalb des jeweiligen vorgegebenen Datenbereichs umfasst. Ein Datensatzprüfwert wird gelesen, der zu den Nutzdaten und der zugehörigen Datensatzkennung des jeweiligen Datensatzes gespeichert ist. Ein entsprechender Vergleichsdatensatzprüfwert wird ermittelt. Eine dem jeweiligen vorgegebenen Datenbereich zugeordnete Datenbereichsinformation wird gelesen, die die Datenbereichskennung des jeweiligen vorgegebenen Datenbereichs und Informationen zu mindestens einem Wertebereich der Eindeutigkeitsstempel der aktuell in dem jeweiligen vorgegebenen Datenbereich gespeicherten Datensätze umfasst. Eine Integrität der Nutzdaten des jeweiligen gelesenen Datensatzes wird überprüft abhängig von der jeweiligen Datensatzkennung, dem jeweiligen Datensatzprüfwert, dem jeweiligen Vergleichsdatensatzprüfwert und der zugehörigen Datenbereichsinformation.

Gesichertes Lesen bedeutet, dass die so gelesenen Daten auf Manipulationen überprüft werden, zum Beispiel durch Überprüfen eines kryptographisch ermittelten Prüfwerts, wie zum Beispiel des Datensatzprüfwerts, oder einer kryptographisch ermittelten digitalen Signatur.

Anhand des Datensatzprüfwerts ist eine Manipulation der Nutzdaten und/oder der zugehörigen Datensatzkennung zuverlässig erkennbar. Anhand der Datenbereichskennung ist ein Austausch eines Datensatzes zwischen unterschiedlichen vorgegebenen Datenbereichen zuverlässig erkennbar. Ferner ist anhand der logischen Position des Datensatzes innerhalb des zugehörigen, vorgegebenen Datenbereichs ein Vertauschen von Datensätzen zuverlässig erkennbar. Anhand des Eindeutigkeitsstempels und der Information zu dem mindestens einen Wertebereich der Eindeutigkeitsstempel ist eine so genannte Replay-Attacke zuverlässig erkennbar. Bei einer Replay-Attacke wird beispielsweise ein alter Datensatz, der ungültig geworden ist, der jedoch einen korrekten Datensatzprüfwert aufweist, als ein neuerer Datensatz ausgegeben.

Durch die genannten Maßnahmen werden die Nutzdaten gesichert gelesen. Manipulationen der Nutzdaten werden einfach und zuverlässig erkannt. Ferner ermöglichen die Datensatzkennung, der Datensatzprüfwert und die Datenbereichsinformation einen schnellen Zugriff auf die Nutzdaten und insbesondere ein schnelles, gesichertes Lesen und Überprüfen der Nutzdaten.

In einer vorteilhaften Ausgestaltung des zweiten Aspekts wird mindestens ein gemeinsamer oder jeweiliger Datenbereichsprüfwert mindestens einer Datenbereichsinformation mindestens eines vorgegebenen Datenbereichs gelesen. Jeweils ein entsprechender gemeinsamer oder jeweiliger Vergleichsdatenbereichsprüfwert wird zu der mindestens einen Datenbereichsinformation des mindestens einen vorgegebenen Datenbereichs ermittelt. Die Integrität der Nutzdaten in dem jeweiligen Datensatz wird überprüft abhängig von dem mindestens einen gelesenen Datenbereichsprüfwert und dem mindestens einen Vergleichsdatenbereichsprüfwert. Der Vorteil ist, dass Manipulationen der mindestens einen Datenbereichsinformation zuverlässig erkannt werden. Ferner kann die Integrität der mindestens einen Datenbereichsinformation einfach, schnell und zuverlässig überprüft werden.

In einer weiteren vorteilhaften Ausgestaltung des zweiten Aspekts wird eine dem jeweiligen vorgegebenen Datenbereich zugeordnete Ausschlussliste ungültig gewordener Datensätze nach einer Registrierung des jeweiligen gelesenen Datensatzes durchsucht. Die Integrität der Nutzdaten wird in dem jeweiligen Datensatz überprüft abhängig von den in der Ausschlussliste registrierten, ungültig gewordenen Datensätzen. Die dem jeweiligen vorgegebenen Datenbereich zugeordnete Ausschlussliste wird sicher oder gesichert gelesen, das heißt aus einem manipulationssicheren Speicher gelesen und/oder auf ihre Integrität überprüft. Anders ausgedrückt umfasst das Überprüfen der Integrität der Nutzdaten gegebenenfalls auch das Überprüfen der Integrität der Ausschlussliste. Dadurch kann eine Replay-Attacke mit dem ungültig gewordenen Datensatz zuverlässig verhindert werden. Ferner kann so ein gelöschter Datensatz, der durch das Löschen ungültig geworden ist, nicht die Integrität der in dem zugehörigen, vorgegebenen Datenbereich gespeicherten Daten gefährden.

In diesem Zusammenhang ist es vorteilhaft, wenn die Integrität der Nutzdaten in dem jeweiligen Datensatz überprüft wird abhängig von in der Ausschlussliste eingetragenen, ungültig gewordenen Eindeutigkeitsstempeln oder abhängig von mindestens einem Wertebereich ungültig gewordener Eindeutigkeitsstempel, der in der Ausschlussliste eingetragen ist. Dies hat den Vorteil, dass ein Speicherplatzbedarf für die Ausschlussliste gering ist, insbesondere bei Vorsehen des mindestens einen Wertebereichs ungültig gewordener Eindeutigkeitsstempel. Ferner kann die Ausschlussliste so besonders schnell durchsucht werden.

Ausführungsbeispiele der Erfindung sind im Folgenden anhand der schematischen Zeichnungen erläutert. Es zeigen:
- Figur 1: einen digitalen Tachographen,
- Figur 2: eine erste Ausführungsform einer logischen Datenanordnung,
- Figur 3: eine zweite Ausführungsform der logischen Datenanordnung,
- Figur 4: eine Datensatzkennung,
- Figur 5: eine Datenbereichsinformation,
- Figur 6: ein Ablaufdiagramm eines Programms zum gesicherten Speichern von Nutzdaten und
- Figur 7: ein Ablaufdiagramm eines Programms zum gesicherten Lesen von Nutzdaten.

Elemente gleicher Konstruktion oder Funktion sind figurenübergreifend mit den gleichen Bezugszeichen versehen.

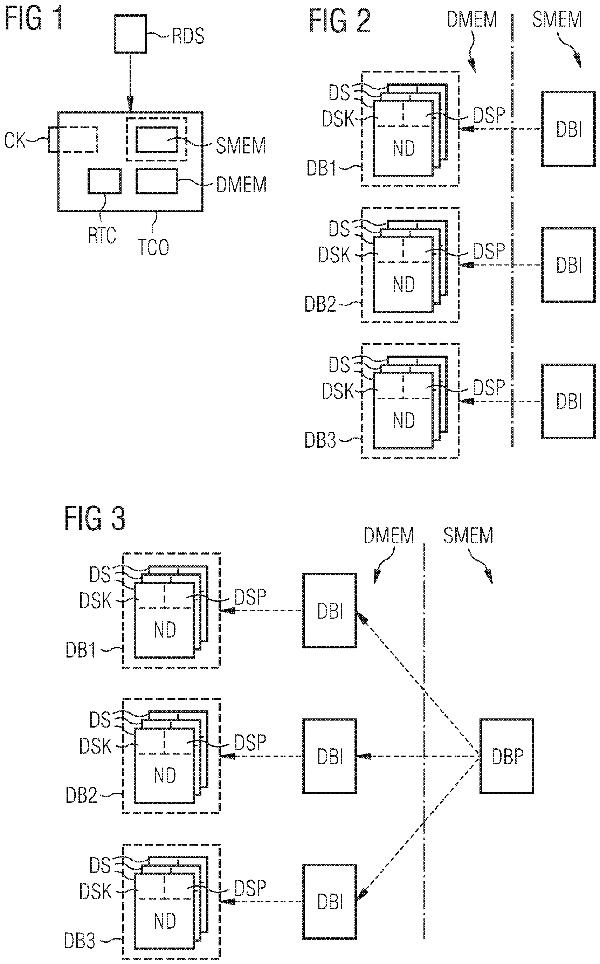

Ein digitaler Tachograph TCO umfasst einen sicheren Speicher SMEM, einen Datenspeicher DMEM, eine Echtzeituhr RTC und mindestens eine Chipkartenleseeinheit, in die eine Chipkarte CK einsteckbar ist, zum Beispiel eine so genannte Tachographenkarte oder Werkstattkarte (Figur 1). Die Echtzeituhr RTC ist bevorzugt vor Manipulationen geschützt ausgebildet und kann nur von berechtigten Personen eingestellt werden, die sich durch eine entsprechende Chipkarte CK, zum Beispiel durch die Werkstattkarte, gegenüber dem Tachographen TCO ausweisen können. Der Tachograph TCO ist zum Erfassen einer Fahrgeschwindigkeit eines Fahrzeugs, in dem der Tachograph TCO vorzugsweise angeordnet ist, mit mindestens einem Raddrehzahlsensor RDS gekoppelt. Der Tachograph TCO kann auch als eine Vorrichtung zum Schreiben und/oder Lesen von Nutzdaten ND bezeichnet werden.

Der sichere Speicher SMEM ist vorzugsweise elektrisch und/oder mechanisch vor Manipulationen der in diesem gespeicherten Daten geschützt. Beispielsweise ist der sichere Speicher SMEM mit einer Schutzschicht oder einem Sicherheitsgitter versehen, die beziehungsweise das elektrisch überwachbar ist. Bei einer Beschädigung der Schutzschicht beziehungsweise des Sicherheitsgitters kann ein Zugriff auf die in dem sicheren Speicher SMEM gespeicherten Daten verhindert werden, zum Beispiel durch Löschen der Daten. Der sichere Speicher SMEM kann jedoch auch anders ausgebildet sein.

Der Datenspeicher DMEM ist vorzugsweise unsicher ausgebildet, also insbesondere nicht elektrisch und/oder mechanisch vor Manipulation geschützt. Aufgrund des im Allgemeinen höheren Preises des sicheren Speichers SMEM gegenüber dem Datenspeicher DMEM weist der sichere Speicher SMEM nur eine geringe Speicherkapazität auf im Vergleich zu dem Datenspeicher DMEM. Jedoch sollen auch die in dem Datenspeicher DMEM gespeicherten Daten geschützt sein. Insbesondere sollen Manipulationen der Daten zuverlässig erkannt werden können. Der Tachograph TCO ist daher dazu ausgebildet, Daten gesichert in dem Datenspeicher DMEM zu speichern und aus diesem gesichert zu lesen. Die in dem Datenspeicher DMEM gespeicherten Daten sind dazu kryptographisch auf Manipulationen überprüfbar gespeichert und werden beim Lesen überprüft, um die Integrität der gelesenen Daten feststellen zu können oder Manipulationen erkennen zu können.

Die in dem Datenspeicher DMEM gespeicherten Daten umfassen die Nutzdaten ND, die beispielsweise die erfasste Fahrgeschwindigkeit umfassen. Die Chipkarte CK kann einen weiteren sicheren Speicher und einen weiteren Datenspeicher umfassen entsprechend dem sicheren Speicher SMEM und dem Datenspeicher DMEM des Tachographen TCO. Entsprechend können auch Daten gesichert in dem weiteren Datenspeicher der Chipkarte CK gespeichert oder gesichert aus diesem gelesen werden.

Figur 2 zeigt eine erste Ausführungsform einer logischen Datenanordnung von Daten in dem Datenspeicher DMEM und dem sicheren Speicher SMEM. Eine entsprechende logische Datenanordnung von Daten kann auch in dem weiteren Datenspeicher der Chipkarte CK und dem weiteren sicheren Speicher der Chipkarte CK vorgesehen sein. In dem Datenspeicher DMEM ist mindestens ein vorgegebener Datenbereich zum Speichern jeweils mindestens eines Datensatzes DS vorgesehen. Beispielhaft sind in Figur 2 ein erster vorgegebener Datenbereich DB1, ein zweiter vorgegebener Datenbereich DB2 und ein dritter vorgegebener Datenbereich DB3 dargestellt. Es kann jedoch auch nur ein vorgegebener Datenbereich vorgesehen sein. Ferner können auch zwei oder mehr als drei vorgegebene Datenbereiche vorgesehen sein.

Die unterschiedlichen vorgegebenen Datenbereiche können für unterschiedliche Datentypen oder Datenstrukturen vorgesehen sein. Jedoch können auch mehrere vorgegebene Datenbereiche für den gleichen Datentyp oder für die gleiche Datenstruktur vorgesehen sein. Ferner kann auch vorgesehen sein, unterschiedliche Datentypen oder Datenstrukturen gemeinsam in einem der vorgegebenen Datenbereiche zu speichern. Beispielsweise kann einer der vorgegebenen Datenbereiche vorgesehen sein zum gesicherten Speichern der erfassten Fahrgeschwindigkeit als Nutzdaten ND. Ein anderer der vorgegebenen Datenbereiche kann vorgesehen sein zum gesicherten Speichern eines Einsteckzeitpunkts und Aussteckzeitpunkts der Chipkarte CK in die beziehungsweise aus der Chipkartenleseeinheit des Tachographen TCO als Nutzdaten ND. Es können jedoch auch andere oder weitere Nutzdaten ND gespeichert werden.

Die Datensätze DS, die in den vorgegebenen Datenbereichen speicherbar sind, umfassen jeweils die Nutzdaten ND, eine Datensatzkennung DSK und einen Datensatzprüfwert DSP. Der Datensatzprüfwert DSP wird über die Nutzdaten ND und die Datensatzkennung DSK des jeweiligen Datensatzes DS gebildet. Der Datensatzprüfwert DSP wird vorzugsweise kryptographisch gebildet, zum Beispiel als eine digitale Signatur oder als ein Nachrichtenauthentisierungskode, der auch als Message Authentication Code, oder kurz: MAC, bezeichnet werden kann. Der Datensatzprüfwert DSP kann jedoch auch anders ausgebildet sein. Die Datensatzkennung DSK und der Datensatzprüfwert DSP sind dem zugehörigen Datensatz DS logisch zugeordnet, müssen jedoch nicht zusammen mit den Nutzdaten ND in dem zugehörigen, vorgegebenen Datenbereich gespeichert sein. Die Datensatzkennung DSK und der Datensatzprüfwert DSP des jeweiligen Datensatzes DS können auch an einem anderen Ort, zum Beispiel einem anderen Datenträger, gespeichert sein.

Der mindestens eine vorgegebene Datenbereich ist vorzugsweise als ein Ringspeicher ausgebildet mit einer vorgegebenen maximalen Anzahl MAX DS von Datensätzen DS, die in dem jeweiligen Ringspeicher, das heißt in dem jeweiligen vorgegebenen Datenbereich, speicherbar sind. Der jeweilige Ringspeicher zeichnet sich dadurch aus, dass Datensätze DS nur an aufeinander folgenden, vorgegebenen Positionen POS speicherbar sind und dass bei dem Speichern des Datensatzes DS, der neu in dem Ringspeicher gespeichert wird, der jeweils älteste Datensatz DS in dem Ringspeicher überschrieben wird, wenn die maximale Anzahl MAX DS von Datensätzen DS in dem jeweiligen Ringspeicher erreicht ist, das heißt der jeweilige Ringspeicher voll ist. Der mindestens eine vorgegebene Datenbereich kann jedoch auch anders ausgebildet sein.

Für den Tachographen TCO ist die maximale Anzahl MAX_DS von Datensätzen DS bevorzugt so vorgegeben, dass die Nutzdaten ND, die innerhalb eines vorgegebenen Zeitraums voraussichtlich gespeichert werden sollen, in den jeweiligen Ringspeichern speicherbar sind, ohne dass ältere Datensätze DS überschrieben werden müssen. Beispielsweise beträgt der vorgegebene Zeitraum ein Jahr. Der vorgegebene Zeitraum kann jedoch auch kürzer oder länger vorgegeben sein.

Dem jeweiligen vorgegebenen Datenbereich ist jeweils eine Datenbereichsinformation DBI zugeordnet. In dem ersten Ausführungsbeispiel ist die jeweilige Datenbereichsinformation DBI in dem sicheren Speicher SMEM gespeichert. Dadurch ist die jeweilige Datenbereichsinformation DBI vor Manipulation geschützt. Figur 3 zeigt eine zweite Ausführungsform der Datenanordnung. Bei der zweiten Ausführungsform der Datenanordnung ist vorgesehen, die jeweilige Datenbereichsinformation DBI in dem Datenspeicher DMEM zu speichern. Um Manipulationen an einer der Datenbereichsinformationen DBI erkennen zu können, ist vorgesehen, einen Datenbereichsprüfwert DBP für die jeweilige Datenbereichsinformation DBI oder gemeinsam für zwei oder mehr oder für auch alle Datenbereichsinformationen DBI zu ermitteln und in dem sicheren Speicher SMEM zu speichern. Dadurch wird in dem sicheren Speicher SMEM besonders wenig Speicherplatz benötigt.

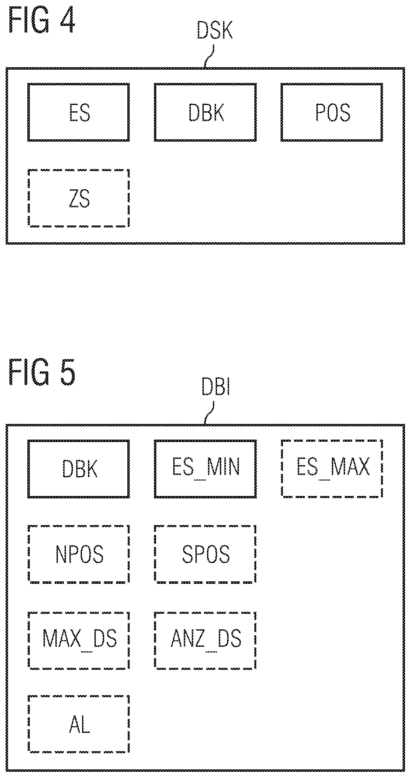

Figur 4 zeigt die Datensatzkennung DSK. Die Datensatzkennung DSK des jeweiligen Datensatzes DS umfasst einen Eindeutigkeitsstempel ES, eine Datenbereichskennung DBK und eine logische Position POS des jeweiligen Datensatzes DS innerhalb des jeweiligen vorgegebenen Datenbereichs. Ferner kann die Datensatzkennung DSK auch einen Zeitstempel ZS umfassen, der vorzugsweise durch die Echtzeituhr RTC erzeugbar ist. Der Eindeutigkeitsstempel ES ist so ausgebildet, dass dieser jeweils eindeutig ist für jeden Datensatz DS und den jeweiligen vorgegebenen Datenbereich. Dies umfasst, dass ein bereits genutzter und ungültig gewordener Eindeutigkeitsstempel ES in dem zugehörigen, vorgegebenen Datenbereich nicht erneut genutzt wird für einen neuen Datensatz DS und dass ein neuer und in dem zugehörigen, vorgegebenen Datenbereich bislang ungenutzter Eindeutigkeitsstempel ES erzeugt und genutzt wird für einen Datensatz DS, der geändert wurde. Vorzugsweise ist der Eindeutigkeitsstempel ES als eine fortlaufende Nummer ausgebildet, zum Beispiel aus der Menge der ganzen Zahlen oder aus der Menge der natürlichen Zahlen. Der Eindeutigkeitsstempel ES kann jedoch auch anders ausgebildet sein, zum Beispiel als ein modifizierter Zeitstempel. Die Modifikation ist vorgesehen, um ein wiederholtes Auftreten desselben Eindeutigkeitsstempels ES zu verhindern, wenn die Uhrzeit zurückgestellt wird. Die Datenbereichskennung DBK ist ein eindeutiger Verweis auf den vorgegebenen Datenbereich, dem der jeweilige Datensatz DS zugeordnet ist.

Figur 5 zeigt die Datenbereichsinformation DBI. Die Datenbereichsinformation DBI umfasst die Datenbereichskennung DBK und Informationen zu mindestens einem Wertebereich der Eindeutigkeitsstempel ES der aktuell in dem jeweiligen vorgegebenen Datenbereich gespeicherten Datensätze DS. Diese Information umfasst insbesondere einen Eindeutigkeitsstempel ES_MIN mit dem geringsten Wert aller aktuell in dem zugehörigen Datenbereich gespeicherten Datensätze DS. Ferner kann diese Information auch einen Eindeutigkeitsstempel ES_MAX mit dem größten Wert aller in dem zugehörigen Datenbereich gespeicherten Datensätze DS umfassen. Durch den Eindeutigkeitsstempel ES_MIN mit dem geringsten Wert und dem Eindeutigkeitsstempel ES_MAX mit dem größten Wert ist ein Wertebereich der Eindeutigkeitsstempel ES vorgegeben. Eindeutigkeitsstempel ES sind nur dann gültig, wenn sie innerhalb eines solchen Wertebereichs liegen. Durch Löschen, Ändern oder Hinzufügen von Datensätzen DS zu dem jeweiligen vorgegebenen Datenbereich wird die Information zu dem mindestens einen Wertebereich der Eindeutigkeitsstempel ES in der Datenbereichsinformation DBI entsprechend angepasst. Insbesondere kann vorgesehen sein, zwei oder mehr Wertebereiche der Eindeutigkeitsstempel ES in der jeweiligen Datenbereichsinformation DBI vorzusehen, wenn eine Folge der Eindeutigkeitsstempel ES der Datensätze DS in dem jeweiligen vorgegebenen Datenbereich eine oder mehrere Lücken aufweist. Eine solche Lücke kann beispielsweise durch Löschen eines Datensatzes DS oder mehrerer Datensätze DS entstehen. Unter Löschen ist hier auch zu verstehen, dass der zu löschende Datensatz DS als gelöscht oder ungültig markiert wird. Ungültig wird der jeweilige Datensatz DS beispielsweise auch dadurch, dass dessen Eindeutigkeitsstempel ES nicht innerhalb des mindestens einen Wertebereichs der Eindeutigkeitsstempel ES liegt. Mehrere Wertebereiche der Eindeutigkeitsstempel ES sind beispielsweise als eine verkettete Liste oder als mehrere verkettete Listen speicherbar oder lesbar.

Alternativ oder zusätzlich kann eine Ausschlussliste AL vorgesehen sein, die der jeweiligen Datenbereichsinformation DBI zugeordnet ist. In der Ausschlussliste AL sind gelöschte, das heißt ungültig gewordene, Datensätze DS registriert. Dazu ist beispielsweise der jeweilige Eindeutigkeitsstempel ES in der Ausschlussliste AL eingetragen. Es kann auch vorgesehen sein, einen Wertebereich ungültig gewordener Eindeutigkeitsstempel ES für den jeweils ungültig gewordenen Datensatz DS in die Ausschlussliste AL einzutragen oder einen bereits in der Ausschlussliste AL eingetragenen Wertebereich ungültig gewordener Eindeutigkeitsstempel ES abhängig von dem Eindeutigkeitsstempel ES desjenigen Datensatzes DS zu erweitern, der als ungültig markiert werden soll. Somit ist ein Datensatz DS nur dann gültig, wenn dessen zugehöriger Eindeutigkeitsstempel ES innerhalb des mindestens einen Wertebereichs der Eindeutigkeitsstempel ES liegt und dessen zugehöriger Eindeutigkeitsstempel ES nicht in der Ausschlussliste AL eingetragen ist. Die Ausschlussliste AL ist bevorzugt sicher oder gesichert gespeichert, um eine unberechtigte Manipulation der Ausschlussliste AL zu verhindern.

Ferner ist es vorteilhaft, in der jeweiligen Datenbereichsinformation eine neueste Position NPOS des zuletzt gespeicherten Datensatzes DS in dem zugehörigen, vorgegebenen Datenbereich und/oder eine Schreibposition SPOS der als nächstes zu beschreibenden Position POS in dem zugehörigen, vorgegebenen Datenbereich und/oder eine Anzahl ANZ_DS von Datensätzen DS, die aktuell in dem zugehörigen, vorgegebenen Datenbereich gespeichert sind, und/oder die maximale MAX_DS von Datensätzen DS, die in dem zugehörigen, vorgegebenen Datenbereich speicherbar sind, vorzusehen. Durch Vorsehen dieser Informationen in der jeweiligen Datenbereichsinformation DBI kann der Zugriff auf die Datensätze DS des zugehörigen, vorgegebenen Datenbereichs besonders einfach und schnell erfolgen. Es müssen jedoch nicht alle diese Informationen in der Datenbereichsinformation DBI vorgesehen sein. Beispielsweise kann die maximale Anzahl MAX_DS von Datensätzen DS, die in dem jeweiligen vorgegebenen Datenbereich speicherbar sind, auch fest in einem Programm kodiert sein, das das gesicherte Schreiben und/oder Lesen durchführt. Ferner ist gegebenenfalls die Schreibposition SPOS aus anderen Informationen ermittelbar, insbesondere wenn der mindestens eine vorgegebene Datenbereich als Ringspeicher ausgebildet ist. Beispielsweise kann als Schreibposition SPOS die der neuesten Position NPOS nachfolgende Position POS unter Berücksichtigung der maximalen Anzahl MAX_DS von Datensätzen DS ermittelt werden. Ferner kann gegebenenfalls der Eindeutigkeitsstempel ES_MAX mit dem größten Wert abhängig von der neuesten Position NPOS und der Schreibposition SPOS ermittelt werden und muss daher nicht vorgesehen sein. Ferner muss gegebenenfalls die neueste Position NPOS und die Schreibposition SPOS nicht vorgesehen sein, wenn die Anzahl ANZ_DS von Datensätzen DS in dem zugehörigen, vorgegebenen Datenbereich vorgesehen ist.

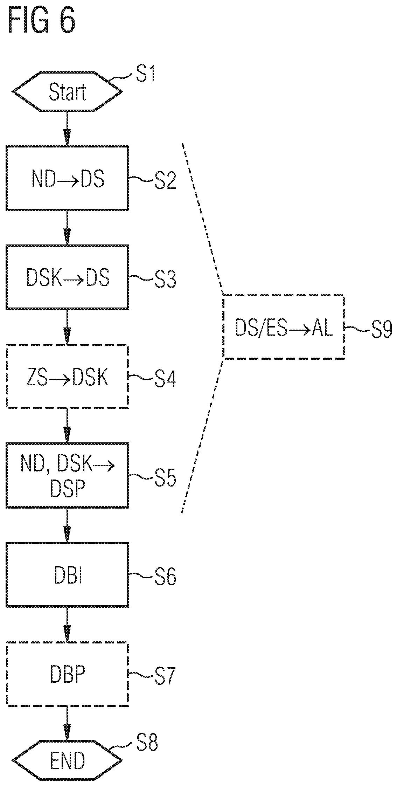

Figur 6 zeigt ein Ablaufdiagramm eines Programms zum gesicherten Schreiben von Nutzdaten ND. Das Programm beginnt in einem Schritt S1. In einem Schritt S2 werden die Nutzdaten ND in mindestens einem Datensatz DS gespeichert. Der jeweilige Datensatz DS ist einem vorgegebenen Datenbereich zugeordnet. Diese Zuordnung erfolgt beispielsweise abhängig von dem Datentyp oder der Datenstruktur der zu speichernden Nutzdaten ND. In einem Schritt S3 wird die jeweilige Datensatzkennung DSK erzeugt und für den jeweiligen Datensatz DS gespeichert. In einem Schritt S4 kann vorgesehen sein, den Zeitstempel ZS zu erzeugen und in der jeweiligen Datensatzkennung DSK zu speichern.

In einem Schritt S5 wird der jeweilige Datensatzprüfwert DSP abhängig von den jeweiligen Nutzdaten ND und der jeweiligen Datensatzkennung DSK ermittelt. Der jeweilige Datensatzprüfwert DSP wird für den jeweiligen Datensatz DS gespeichert. In einem Schritt S6 wird die jeweilige Datenbereichsinformation DBI des jeweils zugehörigen, vorgegebenen Datenbereichs erzeugt und gespeichert oder, falls diese bereits gespeichert ist, aktualisiert. Dies betrifft insbesondere die Information über den mindestens einen Wertebereich der Eindeutigkeitsstempel ES und gegebenenfalls die neueste Position NPOS, die Schreibposition SPOS und/oder die Anzahl ANZ_DS von Datensätzen DS. Das Speichern der Datenbereichsinformation DBI erfolgt vorzugsweise sicher in dem sicheren Speicher SMEM oder gesichert in dem Datenspeicher DMEM. In letzterem Fall wird in einem Schritt S7 der jeweilige oder gemeinsame Datenbereichsprüfwert DBP erzeugt und sicher in dem sicheren Speicher SMEM gespeichert. Das Programm endet in einem Schritt S8.

Es kann auch ein Schritt S9 vorgesehen sein, der beispielsweise anstatt der Schritte S2 bis S5 ausgeführt wird, um einen Datensatz DS oder zwei oder mehr Datensätze DS zu löschen oder als ungültig zu markieren. Der jeweilige Datensatz DS wird dazu beispielsweise in der vorgesehenen Ausschlussliste AL registriert, zum Beispiel durch Eintragen des jeweiligen Eindeutigkeitsstempels ES oder durch Eintragen oder Anpassen eines Wertebereichs oder mehrerer Wertebereiche ungültig gewordener Eindeutigkeitsstempel ES.

Anhand der so gespeicherten Daten ist eine Integrität der Nutzdaten ND überprüfbar. Eine Manipulation von Nutzdaten ND oder Datensatzkennung DSK und/oder gegebenenfalls von Datenbereichsinformationen DBI, das heißt eine Verletzung der Integrität der Nutzdaten ND, ist so erkennbar. Das Überprüfen erfolgt bei dem gesicherten Lesen der Nutzdaten ND.

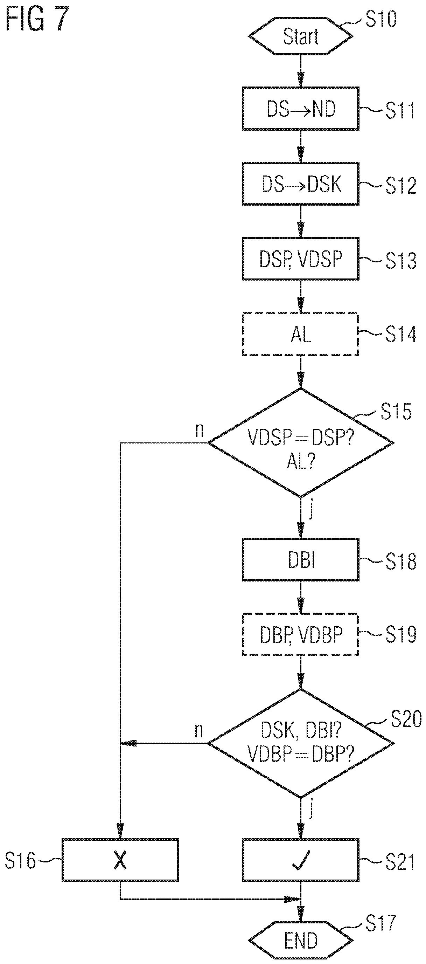

Figur 7 zeigt ein Ablaufdiagramm eines Programms zum gesicherten Lesen von Nutzdaten ND. Das Programm beginnt in einem Schritt S10. In einem Schritt S11 werden die zu lesenden Nutzdaten ND aus den jeweiligen Datensätzen DS gelesen. Ferner wird in einem Schritt S12 die Datensatzkennung DSK des jeweils zugehörigen Datensatzes DS gelesen. In einem Schritt S13 wird der jeweilige Datensatzprüfwert DSP des jeweiligen Datensatzes DS gelesen. Ferner wird abhängig von den gelesenen Nutzdaten ND und der jeweils zugehörigen Datensatzkennung DSK ein jeweils zugehöriger Vergleichsdatensatzprüfwert VDSP ermittelt. Das Ermitteln des Vergleichsdatensatzprüfwerts VDSP erfolgt bevorzugt auf die gleiche Weise, wie das Ermitteln des Datensatzprüfwerts DSP bei dem gesicherten Speicher der Nutzdaten ND. Dies ist jedoch abhängig von der Art des Datensatzprüfwerts DSP. Ferner kann in einem Schritt S14 vorgesehen sein, die Ausschlussliste AL zu lesen, die der Datenbereichsinformation DBI des zugehörigen vorgegebenen Datenbereichs zugeordnet ist, und gegebenenfalls auf ihre Integrität zu überprüfen.

In einem Schritt S15 wird überprüft, ob der Vergleichsdatensatzprüfwert VDSP gleich dem Datensatzprüfwert DSP ist. Ferner kann in dem Schritt S15 überprüft werden, ob der jeweilige Datensatz DS in der Ausschlussliste AL registriert ist. Ist der ermittelte Vergleichsdatensatzprüfwert VDSP ungleich dem jeweiligen Datensatzprüfwert DSP oder ist der jeweilige Datensatz DS in der Ausschlussliste AL registriert, dann wird das Programm in einem Schritt S16 fortgesetzt, in dem festgestellt wird, dass die Integrität der Nutzdaten ND verletzt ist. Das Programm endet dann in einem Schritt S17.

Ist in dem Schritt S15 jedoch der Vergleichsdatensatzprüfwert VDSP gleich dem Datensatzprüfwert DSP und ist der jeweilige Datensatz DS nicht in der Ausschlussliste AL registriert, dann wird das Programm in einem Schritt S18 fortgesetzt. In dem Schritt S18 wird die Datenbereichsinformation DBI des zugehörigen, vorgegebenen Datenbereichs gelesen. Gegebenenfalls ist in einem Schritt S19 vorgesehen, den jeweiligen oder gemeinsamen Datenbereichsprüfwert DBP zu lesen und einen Vergleichsdatenbereichsprüfwert VDBP entsprechend dem Datenbereichsprüfwert DBP zu ermitteln. In einem Schritt S20 wird überprüft, ob die Informationen in der Datensatzkennung DSK und in der Datenbereichsinformation DBI plausibel sind. Beispielsweise wird überprüft, ob der in der Datensatzkennung DSK gespeicherte Eindeutigkeitsstempel ES innerhalb des mindestens einen Wertebereichs der Eindeutigkeitsstempel ES liegt. Ferner wird überprüft, ob die Datenbereichskennung DBK übereinstimmt. Ferner wird vorzugsweise überprüft, ob die jeweilige Position POS, die in der jeweiligen Datensatzkennung DSK gespeichert ist, jeweils der tatsächlichen Position POS des jeweiligen Datensatzes DS in dem jeweils zugehörigen, vorgegebenen Datenbereich entspricht. Ferner kann überprüft werden, ob der Vergleichsdatenbereichsprüfwert VDBP gleich dem Datenbereichsprüfwert DBP ist. Sind die Informationen in der Datensatzkennung DSK und der Datenbereichsinformation DBI nicht plausibel oder stimmen der Vergleichsdatenbereichsprüfwert VDBP und der Datenbereichsprüfwert DBP nicht überein, dann wird das Programm in dem Schritt S16 fortgesetzt und in dem Schritt S17 beendet. Andernfalls wird das Programm in einem Schritt S21 fortgesetzt, in dem festgestellt wird, dass die Integrität der Nutzdaten ND gegeben ist und diese mit hoher Wahrscheinlichkeit nicht manipuliert wurden. Das Programm endet in dem Schritt S17.

Eine Reihenfolge der jeweiligen Schritte der Programme gemäß Figur 6 und Figur 7 kann auch anders ausgebildet sein. Beispielsweise ist ein Lesereihenfolge der Nutzdaten ND, der Datensatzkennung DSK, der Datenbereichsinformation DBI, des Datensatzprüfwerts DSP und des Datenbereichprüfwerts DBP unerheblich. Ferner kann auch eine Prüfreihenfolge anders sein, das heißt Überprüfungen in den Schritten S15 und S20 können in einer anderen Reihenfolge ausgeführt werden. Entsprechend ist auch eine Schreibreihenfolge der Nutzdaten ND, der Datensatzkennung DSK, der Datenbereichsinformation DBI, des Datensatzprüfwerts DSP und des Datenbereichprüfwerts DBP unerheblich.

Durch das gesicherte Speichern der Nutzdaten ND und durch das gesicherte Lesen der Nutzdaten ND sind Manipulationen der Nutzdaten ND einfach und zuverlässig erkennbar. Die erkennbaren Manipulationen umfassen Änderungen an den Nutzdaten ND, an der Datensatzkennung DSK und gegebenenfalls an der Datenbereichsinformation DBI. Ferner können die Manipulationen Änderungen der Position POS von Datensätzen DS innerhalb ihres zugehörigen vorgegebenen Datenbereichs, ein Austauschen von Datensätzen DS zwischen unterschiedlichen vorgegebenen Datenbereichen und ein Austauschen von Datenbereichsinformationen umfassen. Ferner sind so genannte Replay-Attacken erkennbar durch Vorsehen des Eindeutigkeitsstempels ES und der Berücksichtigung der Information zu dem mindestens einen Wertebereich der Eindeutigkeitsstempel ES innerhalb des zugehörigen, vorgegebenen Datenbereichs.

Ein Vorteil ist, dass nur über geringe Datenmengen rechenintensive, kryptographische Berechnungen durchgeführt werden müssen für das Ermitteln des jeweiligen Datensatzprüfwerts DSP und Vergleichsdatensatzprüfwerts VDSP und gegebenenfalls für das Ermitteln des jeweiligen oder gemeinsamen Datenbereichprüfwerts DBP und Vergleichsdatenbereichsprüfwerts VDBP. Simulationen haben gezeigt, dass eine Zeitdauer, die für den Integritätsschutz aufgewendet werden muss, sich durch das gesicherte Schreiben oder das gesicherte Lesen gemäß den obigen Ausführungen bei großen Datenmengen etwa um einen Faktor zwei bis drei reduzieren lässt. Ein Zugriff auf einen jeweiligen Datensatz DS, das heißt das gesicherte Schreiben oder das gesicherte Lesen des jeweiligen Datensatzes DS, kann so besonders schnell erfolgen. Das gesicherte Schreiben und das gesicherte Lesen gemäß den obigen Ausführungen ist insbesondere dann besonders vorteilhaft, wenn die gesichert gespeicherten Datensätze DS keinen oder nur seltenen Änderungen unterliegen.

Das gesicherte Schreiben und/oder das gesicherte Lesen gemäß den obigen Ausführungen ist nicht nur in dem Tachographen TCO nutzbar. Andere Vorrichtungen im Automobilbereich, zum Beispiel Steuergeräte, oder in einem anderen technischen Bereich können ebenfalls von dem gesicherten Schreiben und/oder gesicherten Lesen profitieren. Beispielsweise können auch Programmkode und/oder Kennfelder und/oder andere Daten als die Nutzdaten ND entsprechend gesichert geschrieben und/oder gelesen werden.

## Patentansprüche

1. Verfahren zum gesicherten Speichern von Nutzdaten (ND) in einem digitalen Tachograph (TCO), bei dem
- die Nutzdaten (ND) in mindestens einem Datensatz (DS) in mindestens einem vorgegebenen, logischen Datenbereich (DB1) gespeichert werden,
- dem mindestens einen Datensatz (DS) jeweils eine Datensatzkennung (DSK) zugeordnet wird, die umfasst einen in dem jeweiligen vorgegebenen Datenbereich (DB1) eindeutigen Eindeutigkeitsstempel (ES), eine eindeutige Datenbereichskennung (DBK) des vorgegebenen Datenbereichs (DB1), in dem der jeweilige Datensatz (DS) gespeichert ist, und eine logische Position (POS) des jeweiligen Datensatzes (DS) innerhalb des jeweiligen vorgegebenen Datenbereichs (DB1), und die Datensatzkennung (DSK) gespeichert wird,
- zu den Nutzdaten (ND) und der jeweils zugehörigen Datensatzkennung (DSK) des jeweiligen Datensatzes (DS) ein Datensatzprüfwert (DSP) ermittelt und gespeichert wird,
- dem jeweiligen vorgegebenen Datenbereich (DB1) jeweils eine Datenbereichsinformation (DBI) zugeordnet wird, die die Datenbereichskennung (DBK) des jeweiligen vorgegebenen Datenbereichs (DB1) und Informationen zu mindestens einem Wertebereich der Eindeutigkeitsstempel (ES) der aktuell in dem jeweiligen vorgegebenen Datenbereich (DB1) gespeicherten Datensätze (DS) umfasst, und die jeweilige Datenbereichsinformation (DBI) sicher oder gesichert gespeichert wird,
wobei der digitale Tachograph (TCO) einen sicheren Speicher (SMEM), der elektrisch und/oder mechanisch vor Manipulationen der in diesem gespeicherten Daten geschützt ist, und einen nicht elektrisch und/oder mechanisch vor Manipulation geschützten Datenspeicher (DMEM) aufweist, wobei die in dem nicht geschützten Datenspeicher (DMEM) gespeicherten Daten die Nutzdaten (ND) umfassen und wobei die jeweilige Datenbereichsinformation (DBI) in dem sicheren Speicher (SMEM) gespeichert ist.

2. Verfahren nach Anspruch 1, bei dem das gesicherte Speichern der jeweiligen Datenbereichsinformation (DBI) umfasst, zu mindestens einer Datenbereichsinformation (DBI) mindestens eines vorgegebenen Datenbereichs einen gemeinsamen oder jeweiligen Datenbereichsprüfwert (DBP) zu ermitteln und sicher oder gesichert zu speichern.

3. Verfahren nach einem der vorstehenden Ansprüchen, bei dem
- dem jeweiligen vorgegebenen Datenbereich eine Ausschlussliste (AL) ungültig gewordener Datensätze (DS) zugeordnet ist,
- der jeweilige Datensatz (DS), der ungültig geworden ist, in der Ausschlussliste (AL) registriert wird und
- die Ausschlussliste (AL) sicher oder gesichert gespeichert wird.

4. Verfahren nach Anspruch 3, bei dem durch das Registrieren des jeweiligen, ungültig gewordenen Datensatzes (DS) in der Ausschlussliste (AL) der zugehörige Eindeutigkeitsstempel (ES) in die Ausschlussliste (AL) eingetragen wird oder abhängig von diesem mindestens ein Wertebereich ungültig gewordener Eindeutigkeitsstempel (ES) in die Ausschlussliste (AL) eingetragen oder in der Ausschlussliste (AL) erweitert wird.

5. Verfahren nach einem der vorstehenden Ansprüche, bei dem ein aktueller Zeitstempel (ZS) ermittelt und in der jeweiligen Datensatzkennung (DSK) gespeichert wird.

6. Verfahren zum gesicherten Lesen von Nutzdaten (ND) in einem digitalen Tachographen (TCO), bei dem
- die Nutzdaten (ND) mindestens eines Datensatzes (DS) gelesen werden, die in mindestens einem vorgegebenen, logischen Datenbereich (DB1) gespeichert sind,
- eine dem mindestens einen Datensatz (DS) zugeordnete Datensatzkennung (DSK) gelesen wird, die umfasst einen in dem jeweiligen vorgegebenen Datenbereich (DB1) eindeutigen Eindeutigkeitsstempel (ES), eine eindeutige Datenbereichskennung (DBK) des vorgegebenen Datenbereichs (DB1), in dem der jeweilige Datensatz (DS) gespeichert ist, und eine logische Position (POS) des jeweiligen Datensatzes (DS) innerhalb des jeweiligen vorgegebenen Datenbereichs (DB1),
- ein Datensatzprüfwert (DSP) gelesen wird, der zu den Nutzdaten (ND) und der zugehörigen Datensatzkennung (DSK) des jeweiligen Datensatzes (DS) gespeichert ist, und ein entsprechender Vergleichsdatensatzprüfwert (VDSP) ermittelt wird,
- eine dem jeweiligen vorgegebenen Datenbereich (DB1) jeweils zugeordnete Datenbereichsinformation (DBI) gelesen wird, die die Datenbereichskennung (DBK) des jeweiligen vorgegebenen Datenbereichs (DB1) und Informationen zu mindestens einem Wertebereich der Eindeutigkeitsstempel (ES) der aktuell in dem jeweiligen vorgegebenen Datenbereich (DB1) gespeicherten Datensätze (DS) umfasst, und
- eine Integrität der Nutzdaten (ND) des jeweiligen gelesenen Datensatzes (DS) überprüft wird abhängig von der jeweiligen Datensatzkennung (DSK), dem jeweiligen Datensatzprüfwert (DSP), dem jeweiligen Vergleichsdatensatzprüfwert (VDSP) und der zugehörigen Datenbereichsinformation (DBI),
wobei der digitale Tachograph (TCO) einen sicheren Speicher (SMEM), der elektrisch und/oder mechanisch vor Manipulationen der in diesem gespeicherten Daten geschützt ist, und einen nicht elektrisch und/oder mechanisch vor Manipulation geschützten Datenspeicher (DMEM) aufweist, wobei die in dem nicht geschützten Datenspeicher (DMEM) gespeicherten Daten die Nutzdaten (ND) umfassen und wobei die jeweilige Datenbereichsinformation (DBI) in dem sicheren Speicher (SMEM) gespeichert ist.

7. Verfahren nach Anspruch 6, bei dem
- mindestens ein gemeinsamer oder jeweiliger Datenbereichsprüfwert (DBP) mindestens einer Datenbereichsinformation (DBI) mindestens eines vorgegebenen Datenbereichs gelesen wird,
- jeweils ein entsprechender gemeinsamer oder jeweiliger Vergleichsdatenbereichsprüfwert (VDBP) zu der mindestens einen Datenbereichsinformation (DBI) des mindestens einen vorgegebenen Datenbereichs ermittelt wird und
- die Integrität der Nutzdaten (ND) in dem jeweiligen Datensatz (DS) überprüft wird abhängig von dem mindestens einen gelesenen Datenbereichsprüfwert (DBP) und dem mindestens einen Vergleichsdatenbereichsprüfwert (VDBP).

8. Verfahren nach einem der Ansprüche 6 oder 7, bei dem
- eine dem jeweiligen vorgegebenen Datenbereich zugeordnete Ausschlussliste (AL) ungültig gewordener Datensätze (DS) nach einer Registrierung des jeweiligen gelesenen Datensatzes (DS) durchsucht wird und
- die Integrität der Nutzdaten (ND) in dem jeweiligen Datensatz (DS) überprüft wird abhängig von den in der Ausschlussliste (AL) registrierten, ungültig gewordenen Datensätzen (DS).

9. Verfahren nach Anspruch 8, bei dem die Integrität der Nutzdaten (ND) in dem jeweiligen Datensatz (DS) überprüft wird abhängig von in der Ausschlussliste (AL) eingetragenen, ungültig gewordenen Eindeutigkeitsstempeln (ES) oder abhängig von mindestens einem Wertebereich ungültig gewordener Eindeutigkeitsstempel (ES), der in der Ausschlussliste (AL) eingetragen ist.

10. Digitaler Tachograph (TCO), der ausgebildet ist,
- zum Speichern der Nutzdaten (ND) in mindestens einem Datensatz (DS) in mindestens einem vorgegebenen, logischen Datenbereich (DB1),
- zum jeweiligen Zuordnen einer Datensatzkennung (DSK) zu dem mindestens einen Datensatz (DS), die einen in dem jeweiligen vorgegebenen Datenbereich (DB1) eindeutigen Eindeutigkeitsstempel (ES), eine eindeutige Datenbereichskennung (DBK) des vorgegebenen Datenbereichs (DB1), in dem der jeweilige Datensatz (DS) gespeichert ist, und eine logische Position (POS) des jeweiligen Datensatzes (DS) innerhalb des jeweiligen vorgegebenen Datenbereichs (DB1) umfasst, und zum Speichern der Datensatzkennung (DSK),
- zum Ermitteln eines Datensatzprüfwerts (DSP) zu den Nutzdaten (ND) und der jeweils zugehörigen Datensatzkennung (DSK) des jeweiligen Datensatzes (DS) und zum Speichern des jeweiligen Datensatzprüfwerts (DSP) und
- zum Zuordnen jeweils einer Datenbereichsinformation (DBI) zu dem jeweiligen vorgegebenen Datenbereich (DB1), die umfasst die Datenbereichskennung (DBK) des jeweiligen vorgegebenen Datenbereichs (DB1) und Informationen zu mindestens einem Wertebereich der Eindeutigkeitsstempel (ES) der aktuell in dem jeweiligen vorgegebenen Datenbereich (DB1) gespeicherten Datensätze (DS), und zum sicheren oder gesicherten Speichern der jeweiligen Datenbereichsinformation (DBI),
wobei der digitale Tachograph (TCO) einen sicheren Speicher (SMEM), der elektrisch und/oder mechanisch vor Manipulationen der in diesem gespeicherten Daten geschützt ist, und einen nicht elektrisch und/oder mechanisch vor Manipulation geschützten Datenspeicher (DMEM) aufweist, wobei die in dem nicht geschützten Datenspeicher (DMEM) gespeicherten Daten die Nutzdaten (ND) umfassen und wobei die jeweilige Datenbereichsinformation (DBI) in dem sicheren Speicher (SMEM) gespeichert ist.

11. Digitaler Tachograph (TCO), der ausgebildet ist,
- zum Lesen der Nutzdaten (ND) mindestens eines Datensatzes (DS), die in mindestens einem vorgegebenen, logischen Datenbereich (DB1) gespeichert sind,
- zum Lesen einer dem mindestens einen Datensatz (DS) zugeordneten Datensatzkennung (DSK), die umfasst einen in dem jeweiligen vorgegebenen Datenbereich (DB1) eindeutigen Eindeutigkeitsstempel (ES), eine eindeutige Datenbereichskennung (DBK) des vorgegebenen Datenbereichs (DB1), in dem der jeweilige Datensatz (DS) gespeichert ist, und eine logische Position (POS) des jeweiligen Datensatzes (DS) innerhalb des jeweiligen vorgegebenen Datenbereichs (DB1),
- zum Lesen eines Datensatzprüfwerts (DSP), der zu den Nutzdaten (ND) und der zugehörigen Datensatzkennung (DSK) des jeweiligen Datensatzes (DS) gespeichert ist, und zum Ermitteln eines entsprechenden Vergleichsdatensatzprüfwerts (VDSP),
- zum Lesen einer dem jeweiligen vorgegebenen Datenbereich (DB1) jeweils zugeordneten Datenbereichsinformation (DBI), die die Datenbereichskennung (DBK) des jeweiligen vorgegebenen Datenbereichs (DB1) und Informationen zu mindestens einem Wertebereich der Eindeutigkeitsstempel (ES) der aktuell in dem jeweiligen vorgegebenen Datenbereich (DB1) gespeicherten Datensätze (DS) umfasst, und
- zum Überprüfen einer Integrität der Nutzdaten (ND) des jeweiligen gelesenen Datensatzes (DS) abhängig von der jeweiligen Datensatzkennung (DSK), dem jeweiligen Datensatzprüfwert (DSP), dem jeweiligen Vergleichsdatensatzprüfwert (VDSP) und der zugehörigen Datenbereichsinformation (DBI),
wobei der digitale Tachograph (TCO) einen sicheren Speicher (SMEM), der elektrisch und/oder mechanisch vor Manipulationen der in diesem gespeicherten Daten geschützt ist, und einen nicht elektrisch und/oder mechanisch vor Manipulation geschützten Datenspeicher (DMEM) aufweist, wobei die in dem nicht geschützten Datenspeicher (DMEM) gespeicherten Daten die Nutzdaten (ND) umfassen und wobei die jeweilige Datenbereichsinformation (DBI) in dem sicheren Speicher (SMEM) gespeichert ist.

## Claims

1. A method for the protected storage of user data (ND) in a digital tachograph (TCO), in which
- the user data (ND) are stored in at least one data record (DS) in at least one prescribed, logical data area (DB1),
- the at least one data record (DS) is assigned a respective data record identifier (DSK) which comprises an explicitness stamp (ES) which is explicit in the respective prescribed data area (DB1), an explicit data area identifier (DBK) for the prescribed data area (DB1) in which the respective data record (DS) is stored, and a logical position (POS) for the respective data record (DS) within the respective prescribed data area (DB1), and the data record identifier (DSK) is stored,
- the user data (ND) and the respective associated data record identifier (DSK) from the respective data record (DS) have a data record test value (DSP) ascertained and stored for them, and
- the respective prescribed data area (DB1) is assigned in each case a data area information item (DBI) which comprises the data area identifier (DBK) from the respective prescribed data area (DB1) and information relating to at least one range of values for the explicitness stamps (ES) of the data records (DS) which are currently stored in the respective prescribed data area (DB1), and the respective data area information item (DBI) is stored securely or in protected form,
wherein the digital tachograph (TCO) comprises a secure memory (SMEM), which is electrically and/or mechanically protected against manipulations on the data stored therein, and a data memory (DMEM), not electrically and/or mechanically protected against manipulation, wherein the data stored in the unprotected data memory (DMEM) comprise the user data (ND) and wherein the respective data area information item (DBI) is stored in the secure memory (SMEM).

2. Method according to Claim 1, in which the protected storage of the respective data area information item (DBI) comprises ascertaining, and storing securely or in protected form, a common or respective data area test value (DBP) for at least one data area information item (DBI) from at least one prescribed data area.

3. Method according to one of the preceding claims, in which
- the respective prescribed data area has an associated exclusion list (AL) for data records (DS) which have become invalid,
- the respective data record (DS) which has become invalid is recorded in the exclusion list (AL), and
- the exclusion list (AL) is stored securely or in protected form.

4. Method according to Claim 3, in which the recording of the respective data record (DS) which has become invalid in the exclusion list (AL) enters the associated explicitness stamp (ES) into the exclusion list (AL), or said explicitness stamp is taken as a basis for entering at least one range of values for explicitness stamps (ES) which have become invalid into the exclusion list (AL) or expanding it in the exclusion list (AL).

5. Method according to one of the preceding claims, in which a current time stamp (ZS) is ascertained and is stored in the respective data record identifier (DSK).

6. Method for the protected reading of user data (ND) in a digital tachograph (TCO), in which
- the user data (ND) from at least one data record (DS) are read, said data being stored in at least one prescribed, logical data area (DB1),
- a data record identifier (DSK) associated with the at least one data record (DS) is read, said data record identifier comprising an explicitness stamp (ES) which is explicit in the respective prescribed data area (DB1), an explicit data area identifier (DBK) for the prescribed data area (DB1) in which the respective data record (DS) is stored, and a logical position (POS) for the respective data record (DS) within the respective prescribed data area (DB1),
- a data record test value (DSP) is read, said data record test value being stored for the user data (ND) and the associated data record identifier (DSK) from the respective data record (DS), and an appropriate comparison data record test value (VDSP) is ascertained,
- a data area information item (DBI) associated with the respective prescribed data area (DB1) is read, said data area information item comprising the data area identifier (DBK) from the respective prescribed data area (DB1) and information relating to at least one range of values for the explicitness stamps (ES) of the data records (DS) currently stored in the respective prescribed data area (DB1), and
- an integrity for the user data (ND) from the respective read data record (DS) is checked on the basis of the respective data record identifier (DSK), the respective data record test value (DSP), the respective comparison data record test value (VDSP) and the associated data area information item (DBI),
wherein the digital tachograph (TCO) comprises a secure memory (SMEM), which is electrically and/or mechanically protected against manipulations on the data stored therein, and a data memory (DMEM), not electrically and/or mechanically protected against manipulation, wherein the data stored in the unprotected data memory (DMEM) comprise the user data (ND) and wherein the respective data area information item (DBI) is stored in the secure memory (SMEM).

7. Method according to Claim 6, in which
- at least one common or respective data area test value (DBP) for at least one data area information item (DBI) from at least one prescribed data area is read,
- a respective corresponding common or respective comparison data area test value (VDBP) is ascertained for the at least one data area information item (DBI) from the at least one prescribed data area, and
- the integrity of the user data (ND) in the respective data record (DS) is checked on the basis of the at least one read data area test value (DBP) and the at least one comparison data area test value (VDBP).

8. Method according to one of Claims 6 and 7, in which
- an exclusion list (AL) for data records (DS) which have become invalid which is associated with the respective prescribed data area is searched for recording of the respective read data record (DS) and
- the integrity of the user data (ND) is checked in the respective data record (DS) on the basis of the data records (DS) which have become invalid which are recorded in the exclusion list (AL).

9. Method according to Claim 8, in which the integrity of the user data (ND) in the respective data record (DS) is checked on the basis of explicitness stamps (ES) which have become invalid which are entered in the exclusion list (AL) or on the basis of at least one range of values for explicitness stamps (ES) which have become invalid which is entered in the exclusion list (AL) .

10. Digital tachograph (TCO) which is designed
- to store the user data (ND) in at least one data record (DS) in at least one prescribed, logical data area (DB1),
- to respectively assign a data record identifier (DSK) to the at least one data record (DS), said data record identifier comprising an explicitness stamp (ES) which is explicit in the respective prescribed data area (DB1), an explicit data area identifier (DBK) for the prescribed data area (DB1) in which the respective data record (DS) is stored, and a logical position (POS) for the respective data record (DS) within the respective prescribed data area (DB1), and to store the data record identifier (DSK),
- to ascertain a data record test value (DSP) for the user data (ND) and the respective associated data record identifier (DSK) from the respective data record (DS) and to store the respective data record test value (DSP), and
- to assign a data area information item (DBI) to the respective prescribed data area (DB1), said data area information item comprising the data area identifier (DBK) from the respective prescribed data area (DB1) and information relating to at least one range of values for the explicitness stamps (ES) of the data records (DS) currently stored in the respective prescribed data area (DB1), and to store the respective data area information item (DBI) securely or in protected form,
wherein the digital tachograph (TCO) comprises a secure memory (SMEM), which is electrically and/or mechanically protected against manipulations on the data stored therein, and a data memory (DMEM), not electrically and/or mechanically protected against manipulation, wherein the data stored in the unprotected data memory (DMEM) comprise the user data (ND) and wherein the respective data area information item (DBI) is stored in the secure memory (SMEM).

11. Digital tachograph (TCO) which is designed
- to read the user data (ND) from at least one data record (DS) which are stored in at least one prescribed, logical data area (DB1),
- to read a data record identifier (DSK) which is associated with the at least one data record (DS) and which comprises an explicitness stamp (ES) which is explicit in the respective prescribed data area (DB1), an explicit data area identifier (DBK) for the prescribed data area in which the respective data record (DS) is stored, and a logical position (POS) for the respective data record (DS) within the respective prescribed data area (DB1),
- to read a data record test value (DSP) which is stored for the user data (ND) and the associated data record identifier (DSK) from the respective data record (DS) and to ascertain an appropriate comparison data record test value (VDSP),
- to read a data area information item (DBI) which is associated with the respective prescribed data area (DB1) and which comprises the data area identifier (DBK) from the respective prescribed data area (DB1) and information relating to at least one range of values for the explicitness stamps (ES) of the data records (DS) currently stored in the respective prescribed data area (DB1), and
- to check an integrity for the user data (ND) from the respective read data record (DS) on the basis of the respective data record identifier (DSK), the respective data record test value (DSP), the respective comparison data record test value (VDSP) and the associated data area information item (DBI),
wherein the digital tachograph (TCO) comprises a secure memory (SMEM), which is electrically and/or mechanically protected against manipulations on the data stored therein, and a data memory (DMEM), not electrically and/or mechanically protected against manipulation, wherein the data stored in the unprotected data memory (DMEM) comprise the user data (ND) and wherein the respective data area information item (DBI) is stored in the secure memory (SMEM).

## Revendications

1. Procédé de mémorisation sécurisée de données d'utilisateur (ND) dans un tachygraphe numérique (TCO), dans lequel
- les données d'utilisateur (ND) d'au moins un ensemble de données (DS) sont mémorisées dans au moins une zone de données logique prédéterminée (DB1),
- l'au moins un ensemble de données (DS) est associé à chaque fois à un identifiant d'ensemble de données (DSK) qui comprend un timbre d'unicité (ES) unique dans la zone de données prédéterminée respective (DB1), un identifiant de zone de données unique (DBK) de la zone de données prédéterminée (DB1) dans laquelle l'ensemble de données respectif (DS) est mémorisé, et une position logique (POS) de l'ensemble de données respectif (DS) dans la zone de données prédéterminée respective (DB1) et l'identifiant d'ensemble de données (DSK) est mémorisé,
- une valeur de test d'ensemble de données (DSP) est déterminée et mémorisée en plus des données d'utilisateur (ND) et de l'identifiant d'ensemble de données (DSK) respectivement associé de l'ensemble de données (DS) respectif,
- la zone de données prédéterminée respective (DB1) étant associée à chaque fois à une information de zone de données (DBI) qui comprend l'identifiant de zone de données (DBK) de la zone de données prédéterminée respective (DB1) et des informations relatives à au moins une zone de valeurs des timbres d'unicité (ES) des ensembles de données (DS) actuellement mémorisés dans la zone de données prédéterminée respective (DB1), et l'information de zone de données respective (DBI) est mémorisée de manière sûre ou sécurisée,
le tachygraphe numérique (TCO) comportant une mémoire sécurisée (SMEM) qui est protégée électriquement et/ou mécaniquement contre des manipulations des données mémorisées dans celle-ci, et une mémoire de données non protégée électriquement et/ou mécaniquement (DMEM) contre la manipulation, les données mémorisées dans la mémoire de données non protégée (DMEM) comprenant les données d'utilisateur (ND) et
l'information de zone de données respective (DBI) étant mémorisée dans la mémoire sécurisée (SMEM).

2. Procédé selon la revendication 1, dans lequel la mémorisation sécurisée de l'information de zone de données respective (DBI) comprend la détermination et la mémorisation sûre ou sécurisée d'une valeur de test de zone de données (DBP) commune ou respective en plus d'au moins une information de zone de données (DBI) d'au moins une zone de données prédéterminée.

3. Procédé selon l'une des revendications précédentes, dans lequel
- une liste d'exclusion (AL) d'ensembles de données devenus non valides (DS) est associée à la zone de données prédéterminée respective,
- l'ensemble de données respective (DS), devenu invalide, est enregistré dans la liste d'exclusion (AL) et
- la liste d'exclusion (AL) est mémorisée de manière sûre et sécurisée.

4. Procédé selon la revendication 3, dans lequel le timbre d'unicité (ES) associé est entré dans la liste d'exclusion (AL) par enregistrement de l'ensemble de données (DS) respectif devenu non valide dans la liste d'exclusion (AL) ou en fonction de celui-ci au moins une zone de valeurs de timbres d'unicité (ES) devenus non valides est entrée dans la liste d'exclusion (AL) ou est étendue dans la liste d'exclusion (AL).

5. Procédé selon l'une des revendications précédentes, dans lequel un horodatage actuel (ZS) est déterminé et mémorisé dans l'identifiant d'ensemble de données respectif (DSK).

6. Procédé de lecture sécurisée de données d'utilisateur (ND) dans un tachygraphe numérique (TCO), dans lequel
- les données d'utilisateur (ND) d'au moins un ensemble de données (DS) sont lues, lesquelles sont mémorisées dans au moins une zone de données logique prédéterminée (DB1),
- un identifiant d'ensemble de données (DSK) associé à l'au moins un ensemble de données (DS) est lu, lequel comprend un timbre d'unicité (ES) unique dans la zone de données prédéterminée respective (DB1), un identifiant de zone de données unique (DBK) de la zone de données prédéterminée (DB1) dans laquelle l'ensemble de données respectif (DS) est mémorisé et une position logique (POS) de l'ensemble de données respectif (DS) dans la zone de données prédéterminée respective (DB1),
- une valeur de test d'ensemble de données (DSP) est lue, laquelle est mémorisée en plus des données d'utilisateur (ND) et l'identifiant d'ensemble de données associé (DSK) de l'ensemble de données respectif (DS) et de une valeur de test d'ensemble de données de comparaison correspondante (VDSP) est déterminée,
- une information de zone de données (DBI) associée à chaque fois à la zone de données prédéterminée respective (DB1) est lue, laquelle comprend l'identifiant de zone de données (DBK) de la zone de données prédéterminée respective (DB1) et des informations relatives à au moins une zone de valeurs des timbres d'unicité (ES) des ensembles de données (DS) actuellement mémorisés dans la zone de données prédéterminée respective (DB1), et
- une intégrité des données d'utilisateur (ND) de l'ensemble de données lu respectif (DS) est vérifiée en fonction de l'identifiant d'ensemble de données respectif (DSK), de la valeur de test d'ensemble de données respective (DSP), de la valeur de test d'ensemble de données de comparaison respective (VDSP) et de l'information de zone de données associée (DBI), le tachygraphe numérique (TCO) comprenant une mémoire sécurisée (SMEM) protégée électriquement et/ou mécaniquement contre des manipulations des données mémorisées dans celle-ci, et une mémoire de données non protégée électriquement et/ou mécaniquement (DMEM) contre la manipulation, les données mémorisées dans la mémoire de données non protégée (DMEM) comprenant les données d'utilisateur (ND) et l'information de zone de données respective (DBI) étant mémorisée dans la mémoire sécurisée (SMEM).

7. Procédé selon la revendication 6, dans lequel
- au moins une valeur de test de zone de données commune ou respective (DBP) d'au moins une information de zone de données (DBI) d'au moins une zone de données prédéterminée est lue,
- une valeur de test de zone de données de comparaison (VDBP) commune ou respective correspondante est déterminée à chaque fois en plus de l'au moins une information de zone de données (DBI) de l'au moins une zone de données prédéterminée, et
- l'intégrité des données d'utilisateur (ND) dans l'ensemble de données respectif (DS) est vérifiée en fonction de l'au moins une valeur de test de zone de données lue (DBP) et de l'au moins une valeur de test de zone de données de comparaison (VDBP).

8. Procédé selon l'une quelconque des revendications 6 ou 7, dans lequel
- une liste d'exclusion (AL) d'ensembles de données devenus non valides (DS), associée à la zone de données prédéterminée respective est analysée pour rechercher un enregistrement de l'ensemble de données lu respectif (DS) et
- l'intégrité des données d'utilisateur (ND) dans l'ensemble de données respectif (DS) est vérifiée en fonction des ensembles de données (DS) devenus invalides enregistrés dans la liste d'exclusion (AL).

9. Procédé selon la revendication 8, dans lequel l'intégrité des données d'utilisateur (ND) dans l'ensemble de données respectif (DS) est vérifiée en fonction de timbres d'unicité (ES) devenus invalides enregistrés dans la liste d'exclusion (AL) ou en fonction d'au moins une zone de valeurs de timbres d'unicité (ES) devenus invalides qui est entrée dans la liste d'exclusion (AL).

10. Tachygraphe numérique (TCO), conçu pour
- mémoriser les données d'utilisateur (ND) dans au moins un ensemble de données (DS) dans au moins une zone de données logique prédéterminée (DB1),
- associer à chaque fois à l'au moins un ensemble de données (DS) un identifiant d'ensemble de données (DSK) qui comprend un timbre d'unicité (ES) unique dans la zone de données prédéterminée respective (DB1), un identifiant de zone de données unique (DBK) de la zone de données prédéterminée (DB1) dans laquelle l'ensemble de données respectif (DS) est mémorisé, et une position logique (POS) de l'ensemble de données respectif (DS) dans la zone de données prédéterminée respective (DB1) et mémoriser l'identifiant d'ensemble de données (DSK),
- déterminer une valeur de test d'ensemble de données (DSP) en plus des données d'utilisateur (ND) et de l'identifiant d'ensemble de données (DSK) respectivement associé de l'ensemble de données respectif (DS) et mémoriser la valeur de test d'ensemble de données respective (DSP) et
- associer à chaque fois une information de zone de données (DBI) à la zone de données prédéterminée respective (DB1) qui comprend l'identifiant de zone de données (DBK) de la zone de données prédéterminée respective (DB1) et des informations relatives à au moins une zone de valeurs des timbres d'unicité (ES) des ensembles de données (DS) actuellement mémorisés dans la zone de données prédéterminée respective (DB1) et mémoriser de manière sûre et sécurisée l'information de zone de données respective (DBI),
le tachygraphe numérique (TCO) comportant une mémoire sécurisée (SMEM) qui est protégée électriquement et/ou mécaniquement contre des manipulations des données mémorisées dans celle-ci, et une mémoire de données non protégée électriquement et/ou mécaniquement (DMEM) contre la manipulation, les données mémorisées dans la mémoire de données non protégée (DMEM) comprenant les données d'utilisateur (ND) et
l'information de zone de données respective (DBI) étant mémorisée dans la mémoire sécurisée (SMEM).

11. Tachygraphe numérique (TCO) conçu pour
- lire les données d'utilisateur (ND) d'au moins un ensemble de données (DS) qui sont mémorisées dans au moins une zone de données logique prédéterminée (DB1),
- lire un identifiant d'ensemble de données (DSK), associé à au moins un ensemble de données (DS), qui comprend un timbre d'unicité (ES) unique dans la zone de données prédéterminée respective (DB1), un identifiant de zone de données unique (DBK) de la zone de données prédéterminée (DB1) dans laquelle l'ensemble de données respectif (DS) est mémorisé et une position logique (POS) de l'ensemble de données respectif (DS) dans la zone de données prédéterminée respective (DB1),
- lire une valeur de test d'ensemble de données (DSP) mémorisée en plus des données d'utilisateur (ND) et de l'identifiant d'ensemble de données (DSK) associé de l'ensemble de données respectif (DS) et déterminer une valeur de test d'ensemble de données de comparaison correspondante (VDSP),
- lire une information de zone de données (DBI) respectivement associée à la zone de données prédéterminée respective (DB1) qui comprend l'identifiant de zone de données (DBK) de la zone de données prédéterminée respective (DB1) et des informations relatives à au moins une zone de valeurs des timbres d'unicité (ES) des ensembles de données (DS) actuellement mémorisés dans la zone de données prédéterminée respective (DB1), et
- vérifier une intégrité des données d'utilisateur (ND) de l'ensemble de données lu respectif (DS) en fonction de l'identifiant d'ensemble de données respectif (DSK), de la valeur de test d'ensemble de données respectif (DSP), de la valeur de test d'ensemble de données de comparaison respectif (VDSP) et de l'information de zone de données associée (DBI), le tachygraphe numérique (TCO) comprenant une mémoire sécurisée (SMEM) protégée électriquement et/ou mécaniquement contre des manipulations des données mémorisées dans celle-ci, et une mémoire de données non protégée électriquement et/ou mécaniquement (DMEM) contre la manipulation, les données mémorisées dans la mémoire de données non protégée (DMEM) comprenant les données d'utilisateur (ND) et l'information de zone de données respective (DBI) étant mémorisée dans la mémoire sécurisée (SMEM).
